# FASCICULE DE BREVET EUROPEEN

(11) **EP 2 875 304 B1**
(45) Date de publication et mention de la délivrance du brevet: **19.08.2020**
(21) Numéro de dépôt: 13735281.1
(22) Date de dépôt: 11.07.2013
(51) Int. Cl.: F28F 9/02, F25B 15/00, F28D 9/00

(54) **ABSORBEUR A ECHANGEUR A PLAQUES AVEC ELEMENT DE REPARTITION POREUX**
PLATTENTAUSCHERABSORBER MIT PORÖSEM VERTEILUNGSELEMENT
PLATE EXCHANGER ABSORBER WITH POROUS DISTRIBUTION ELEMENT

(30) Priorité: 23.07.2012 FR 1257095
(43) Date de publication de la demande: 27.05.2015
(73) Titulaire: Commissariat à l'Énergie Atomique et aux Énergies Alternatives, 75015 Paris (FR)
(72) Inventeur: WYTTENBACH, Joël, F-73230 THOIRY (FR); BOUDEHENN, François, F-07190 Saint Sauveur De Montagut (FR); DEMASLES, Hélène, F-73290 La Motte-servolex (FR); PAPILLON, Philippe, F-73000 Chambery (FR)
(74) Mandataire: Novaimo
(86) Numéro de dépôt international: PCT/EP2013/064647
(87) Numéro de publication internationale: WO 2014/016127

(56) Documents cités:
- WO-A1-2011/039397
- JP-A- 2000 028 225
- JP-A- 2002 022 309
- JP-A- 2006 162 154
- JP-A- 2006 200 852
- US-A- 3 795 259
- US-A- 5 806 586
- US-A1- 2010 089 559

## Description

### Domaine technique de l'invention

L'invention concerne un système comprenant une pluralité de premiers canaux d'écoulement fluidique et un dispositif de distribution alimenté par un flux d'un premier fluide, notamment un liquide, et injectant le flux de premier fluide dans la pluralité de premiers canaux au niveau d'une sortie du dispositif de distribution. Il peut notamment s'agir d'un liquide absorbant dans le cadre d'une utilisation réalisant une absorption entre deux fluides dans les premiers cannaux. JP 2002 22309 décrit un système selon le préambule de la revendication 1.

L'invention a pour objet également une machine thermodynamique comprenant au moins un tel système, notamment une machine de réfrigération par absorption dans laquelle le système constitue un absorbeur réalisant une absorption, par le premier fluide, d'un deuxième fluide tel qu'un fluide réfrigérant.

### État de la technique

La forte augmentation actuelle des besoins de climatisation en période estivale confère au marché du rafraîchissement solaire un potentiel de développement très important. Ces systèmes utilisent majoritairement des machines à absorption.

Avec l'avènement, depuis quelques années, des machines à absorption de petite puissance d'une part et de la volonté de disposer de solutions compactes et complètes d'autre part, le marché devrait connaître un fort développement futur. Toutefois, l'une des limitations à ce développement est le coût d'investissement initial nécessairement très important. Pour cette raison, un développement important des machines de petites puissances doit être effectué pour en baisser les coûts. Il est donc nécessaire de répondre aux problématiques budgétaires et d'industrialisation susmentionnées en même temps que techniques évoquées plus loin. Les problématiques techniques essentielles concernent notamment le composant de la machine connu sous la dénomination « absorbeur ».

Dans une machine de réfrigération par absorption, le compresseur classique est remplacé par une gestion astucieuse et combinée de premier et deuxième fluides respectivement absorbant et réfrigérant, avec un transfert de masse par absorption du deuxième fluide vers le premier fluide. Le deuxième fluide, ayant une fonction de réfrigérant, arrive à l'absorbeur à l'état gazeux ou quasiment totalement gazeux. L'absorbeur de la machine est l'un des éléments essentiels, étant également le plus spécifique par rapport aux techniques de réfrigération classiques à compression mécanique. Les équilibres entre les phases en présence y sont complexes. Alors qu'un système de réfrigération classique se base sur la force motrice d'un compresseur, les machines à absorption utilisent le couple formé par les premier et deuxième fluides. Le premier fluide permet de transporter le réfrigérant de la basse à la haute pression. Le fait de chauffer le mélange des deux fluides, après absorption, permet de les séparer et de fournir une force motrice pour le circuit réfrigérant. Après avoir traversé le circuit classique de réfrigération, le deuxième fluide réfrigérant doit à nouveau être absorbé par le premier fluide absorbant avant de revenir vers l'organe de chauffe. Ce phénomène d'absorption est spécifique et difficile à appréhender puisqu'il combine un écoulement avec un transfert de masse, un changement de phase et un échange thermique, tous ces phénomènes étant liés entre à propos des vitesses d'avancement.

Une technique connue est de concevoir un absorbeur configuré de sorte à former, dans chacun d'une pluralité de canaux d'écoulement fluidique, un film ruisselant de premier fluide tandis que le deuxième fluide circule en co-courant le long du film ruisselant dans le même canal d'écoulement fluidique. Les documents JP2006200852, WO201139397 et JP2006162154 divulguent de telles solutions, mais elles ne sont pas satisfaisantes en termes de robustesse, d'industrialisation et de coût. Notamment, la distribution des fluides dans les canaux est peu satisfaisante en termes d'homogénéité et de fiabilité (notamment sujet à encrassement dans le cas de trous localisés).

Bien que ces problématiques concernent principalement le cas de machines de réfrigération par absorption, elles peuvent tout autant toucher des machines thermodynamiques de nature différentes à double distribution de gaz et de liquide dans des canaux communs, voire même le cas de tours de lavage. Elles peuvent aussi se poser dans le cas d'une distribution mono-fluide. La problématique principale est, à moindre coût, de manière fiable et robuste, facilement industrialisable, de répartir de manière la plus homogène possible au moins le premier fluide dans la pluralité de canaux d'écoulement.

Les documents WO09962318, JP60232495 et DE102010041289 relatifs à des échangeurs à plaques ne répondent pas à ces problématiques et restent complexes en raison d'une distribution en de multiples points et/ou à plusieurs étages.

### Objet de l'invention

Le but de la présente invention est de proposer un système qui remédie simultanément à l'ensemble des inconvénients listés ci-dessus. Notamment, un objet de l'invention est de fournir un système permettant de distribuer au moins le premier fluide dans une pluralité de canaux d'écoulement fluidique de manière fiable et robuste, économique et facilement industrialisable.

Ces objets peuvent être atteints par tout ou partie des revendications annexées, en particulier par un système selon la revendication 1.

Une machine thermodynamique pourra préférentiellement comprendre au moins un tel système.

D'autre part, il pourra être prévu une utilisation d'un tel système dans laquelle les premier et deuxième fluides sont configurés de sorte que le deuxième fluide est au moins partiellement absorbé par le premier fluide durant l'écoulement dans les premiers canaux d'écoulement fluidique, pour constituer un absorbeur pour une machine thermodynamique de réfrigération par absorption solaire.

### Description sommaire des dessins

Les caractéristiques ressortiront plus clairement de la description qui va suivre de modes particuliers de réalisation de l'invention donnés à titre d'exemples non limitatifs et représentés sur les dessins annexés, dans lesquels :
- les figures 1 à 4 sont des vues d'un exemple de système selon l'invention,
- les figures 5 et 6 sont des vues en coupe d'un détail du système au niveau du dispositif de distribution, selon la coupe A-A de la figure 2,
- la figure 7 est une autre vue du système,
- la figure 8 est une vue du système selon la coupe B-B de la figure 7,
- les figures 9 à 11 sont des vues d'une variante de dispositif de distribution équipé d'un dispositif anti-coalescence,
- et la figure 12 est une vue d'une variante de construction d'un élément de répartition appartenant au dispositif de distribution.

### Description de modes préférentiels de l'invention

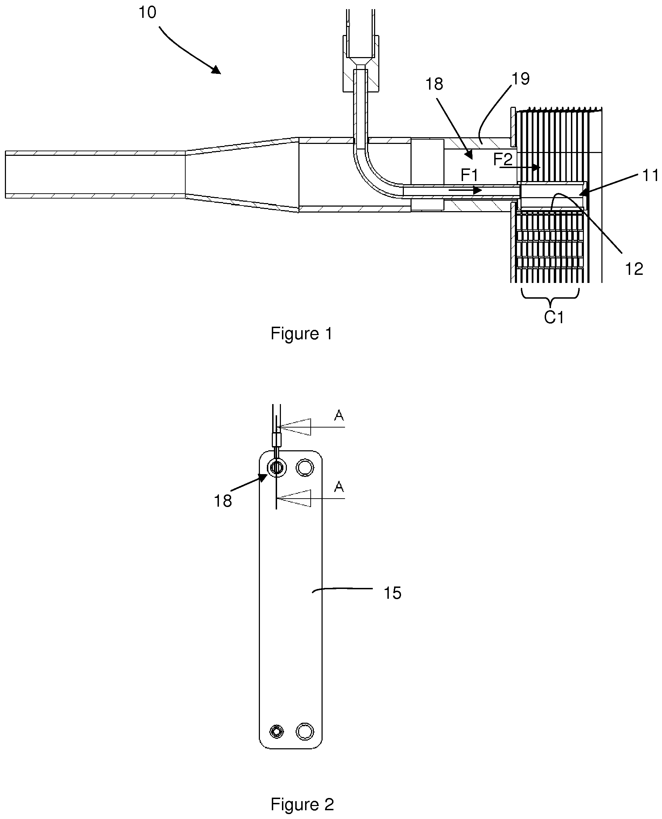

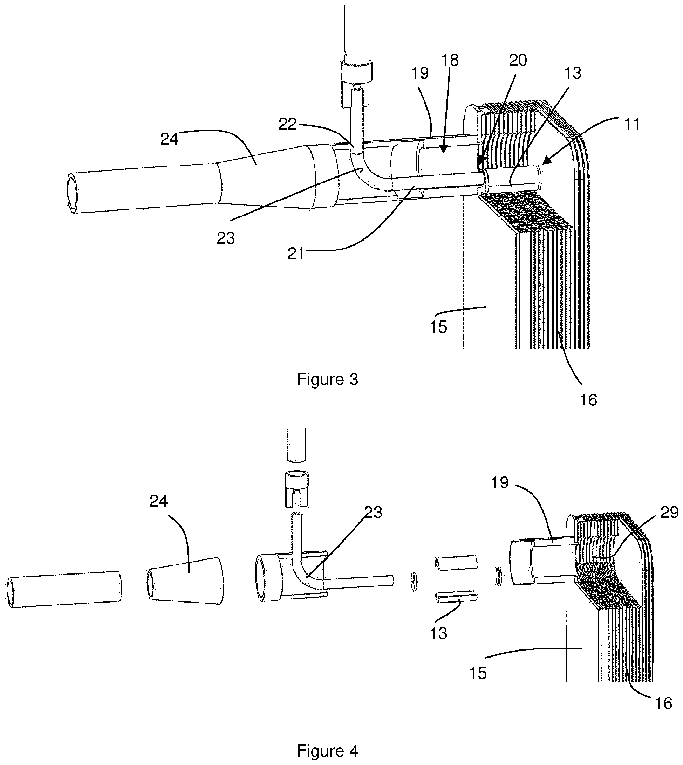

La suite de la description, en référence aux figures 1 à 12, est relative à une machine thermodynamique équipée d'un système objet de l'invention afin de réaliser une distribution homogène et régulière, comme détaillé plus loin, d'un premier fluide, notamment un liquide par exemple de type absorbant, entre une pluralité de premiers canaux d'écoulement fluidique. Ces premiers canaux d'écoulement fluidique peuvent avantageusement être délimités par des plaques d'un échangeur à plaques appartenant au système, notamment globalement orientés verticalement de sorte à pouvoir former un film ruisselant dans chacun desdits premiers canaux à l'aide du premier fluide ainsi distribué et réparti.

Avantageusement mais non exclusivement, il pourra s'agir d'une machine de réfrigération par absorption dans laquelle le système constitue un absorbeur réalisant une absorption par le premier fluide, d'un deuxième fluide tel qu'un fluide réfrigérant de type gaz (avec éventuellement des traces de liquide) au moins au niveau d'une partie d'un circuit réfrigérant de la machine. C'est pourquoi, outre un dispositif de distribution du premier fluide alimentant les premiers canaux d'écoulement de manière la plus homogène possible entre eux, le système comporte un dispositif d'alimentation configuré pour alimenter les premiers canaux d'écoulement de l'échangeur à plaques en un deuxième fluide, notamment gazeux, préférentiellement de type réfrigérant, prévu pour circuler dans les premiers canaux conjointement avec le premier fluide, notamment le long des films ruisselants formé par ce dernier après son éjection uniforme hors du dispositif de distribution. Les dispositifs de distribution de premier fluide et d'alimentation en deuxième fluide sont notamment agencés de sorte à alimenter la pluralité de premiers canaux au niveau de zones d'alimentation des premiers canaux communes aux premier et deuxième fluides. Le premier fluide est distribué en sortie du dispositif de distribution de sorte à rencontrer directement après son éjection un flux formé par le deuxième fluide préalablement sortant à la sortie du dispositif d'alimentation.

Préférentiellement, le premier fluide est un liquide de type absorbant et le deuxième fluide est un gaz apte à être au moins partiellement absorbé par le premier fluide avec un transfert de masse du deuxième fluide vers le premier fluide. Ce deuxième fluide peut notamment être un réfrigérant.

Ainsi, les figures 1 à 12 représentent différentes variantes d'un tel système 10 comprenant une pluralité de premiers canaux d'écoulement fluidique C1 et un dispositif de distribution 11 alimenté par un flux d'un premier fluide F1, notamment un liquide par exemple de type absorbant, et injectant le flux de premier fluide F1 dans la pluralité de premiers canaux C1 au niveau d'une sortie 12 du dispositif de distribution 11.

La sortie 12 du dispositif de distribution 11 est constituée par un élément de répartition 13 du premier fluide F1 configuré de sorte à être traversé par le premier fluide F1 en lui faisant subir une perte de charge telle que le premier fluide F1 soit sortant hors de l'élément de répartition 13 selon une répartition surfacique uniforme au niveau d'une surface de sortie 14 de l'élément de répartition 13, d'une manière assurant une alimentation homogène en premier fluide F1 des premiers canaux C1, la quantité reçue de premier fluide F1 par chaque canal C1 étant ainsi identique d'un canal C1 à l'autre parmi la pluralité de tels canaux C1. Il s'agit notamment, mais de manière non limitative, d'un matériau poreux configuré de manière adaptée pour parvenir à ce résultat.

Préférentiellement, l'élément de répartition 13 comprend des orifices de passage traversants toute l'épaisseur de l'élément de répartition et débouchant sur la surface de sortie 14, ces passages traversants étant avantageusement tortueux ou avec des chicanes depuis la surface d'entrée vers la surface de sortie 14.

Comme indiqué plus loin, ces dispositions peuvent être obtenues à l'aide :
- d'une structure autoporteuse de matière frittée formée par agglomération de billes, notamment configurée de sorte à être dépourvue de direction privilégiée d'écoulement du premier fluide et à présenter un coefficient d'écoulement du premier fluide dépendant de la finesse de la matière frittée,
- d'une toile métallique enroulée,
- d'un empilement de feuilles munies de perçages et séparées deux à deux par des éléments d'entretoisement autorisant une circulation du premier fluide entre les feuilles, les perçages de deux feuilles adjacentes étant décalés dans une direction perpendiculaire à la direction de perçage.

La méthode proposée consiste à utiliser un matériau industriel, notamment poreux, dont la perte de charge est suffisamment importante pour assurer l'homogénéité au moins linéique, voire avantageusement surfacique, de la distribution. Ce type de matériau a pour effet de créer un nombre important de chicanes sur le trajet du premier fluide F1, ce qui a pour effet de présenter un nombre très important de trajets possibles. L'obturation éventuelle d'une portion de la surface 14 n'entraîne donc qu'une déviation locale du flux qui suit alors un trajet adjacent, ce qui permet au flux sortant de ne jamais présenter de discontinuité marquée. Certains éléments poreux comme les structures frittées avantageusement présentent d'autre part une surface irrégulière qui limite fortement les risques d'obturation par des particules présentes dans le premier fluide F1. Ces propriétés permettent à l'élément de répartition 13 d'avoir une bonne résistance à l'encrassement. La fabrication de tels matériaux est maîtrisée au niveau industriel, ce qui est aussi un critère de choix technologique important. La finesse variable des structures frittées permet d'ajuster le coefficient d'écoulement à géométrie extérieure constante. Les pertes de charge peuvent être particulièrement importantes pour une faible épaisseur, ce qui permet de diminuer la taille globale du dispositif 11 par rapport à l'art antérieur tout en maintenant une très bonne homogénéité de la distribution du premier fluide F1 entre les premiers canaux C1.

La perte de charge acceptable et suffisante dépend également de plusieurs paramètres géométriques et d'écoulement, elle peut être typiquement comprise entre 3 et 250 mbar.

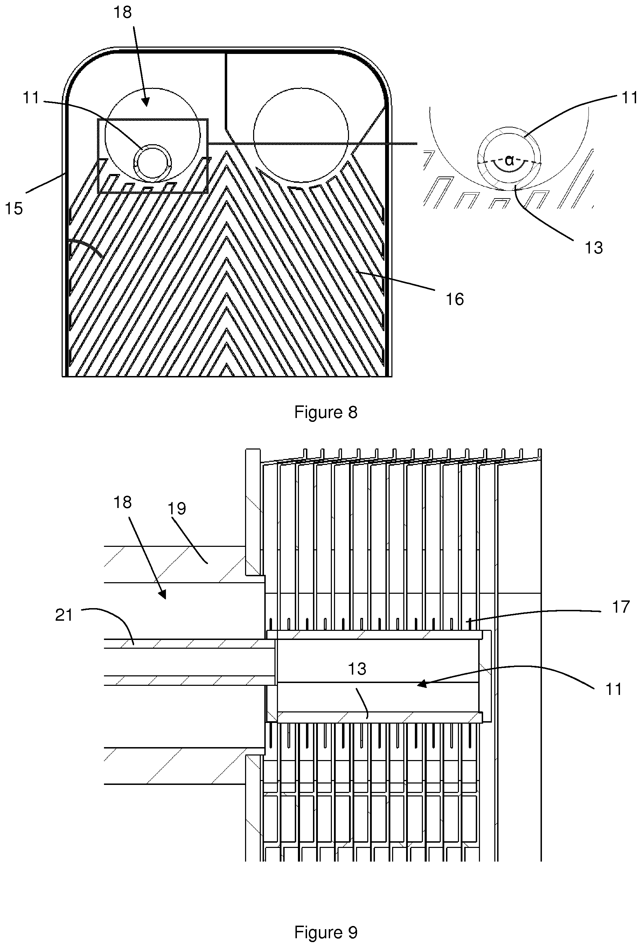

Le système comprend un échangeur à plaques 15 comportant lui-même une pluralité de plaques 16 qui délimitent entre elles, deux à deux, au moins des premiers canaux d'écoulement fluidique C1 parallèles. Il peut notamment s'agir d'un échangeur à plaques 15 classique, connu en soi et déjà industrialisé, permettant d'abaisser les coûts de la solution selon l'invention et de la rendre robuste et fiable, sans nécessiter pour autant des adaptations complexes en vue de la fourniture d'un absorbeur. L'échangeur à plaques 15 et/ou le dispositif de distribution 11 sont configurés de sorte que le premier fluide F1 sortant au niveau de la surface de sortie 14 de l'élément de répartition 13 forme des films ruisselants sensiblement identiques le long de tous les premiers canaux d'écoulement fluidique C1. Les corrugations des plaques 16 sont avantageusement inclinées par rapport à la verticale, notamment selon un angle compris environ entre 20 et 40°, typiquement de l'ordre de 30° (voir figure 8), ce qui est favorable à l'établissement d'un film ruisselant avec le fluide F1 issu du dispositif 11. Ce type d'angle est une version courante utilisée dans la plupart des échangeurs à plaques 15 industriels brasés ou soudés.

Comme indiqué précédemment, chaque premier canal d'écoulement fluidique C1 comprend une zone d'alimentation en premier fluide F1 et en deuxième fluide F2. Les zones d'alimentation associées à la pluralité de premiers canaux C1 sont échelonnées suivant une première direction X, notamment orientée sensiblement horizontalement. D'autre part, l'élément de répartition 13 du premier fluide F1 est configuré de sorte que sa surface de sortie 14 est disposée en vis-à-vis des zones d'alimentation des premiers canaux C1, suivant une deuxième direction Y sensiblement perpendiculaire à la première direction X, notamment orientée sensiblement verticalement.

L'absorption permet au deuxième fluide F2 d'être absorbé par le premier fluide F1, notamment dans le cas d'une solution liquide absorbante, le long des premiers canaux C1. Le principe d'un film ruisselant de premier fluide F1 pour réaliser une réaction d'absorption est couramment utilisé dans le cadre d'échangeurs à tube et calandre (qui présente une conception très différente de la structure des plaques 16 et de la forme des canaux C1), avec des résultats satisfaisants au niveau de la réaction d'absorption et de l'échange thermique éventuel de refroidissement. Il s'agit donc, selon l'invention, de reproduire de telles conditions de fonctionnement favorables dans la structure d'un échangeur à plaques 15. Au niveau géométrique, un échangeur à plaques 16 présente des canaux d'écoulement C1 parallèles, ce qui induit à l'heure actuelle un débit linéique décroissant avec le nombre de plaques 16. La sélection de l'échangeur 15 s'oriente vers une géométrie à faible largeur selon X avec peu de plaques 16 et donc une forte hauteur selon Y pour maintenir la surface d'échange nécessaire au sein de l'échangeur à plaques 15. Le rapport entre la hauteur et la largeur des plaques de l'échangeur est ici notamment supérieur à 3, notamment supérieur à 4. C'est justement l'un des objectifs de l'aménagement et de la conception d'un tel dispositif de distribution 11 que de fournir un élément de répartition 13 du premier fluide F1 configuré de sorte à assurer une homogénéité au moins linéique de la distribution du premier fluide F1 suivant la première direction X, voire avantageusement surfacique.

Ainsi, notamment en vue de la constitution d'un absorbeur, le système comprend un dispositif d'alimentation 18 apte à alimenter les zones d'alimentation des premiers canaux C1 en un flux du deuxième fluide F2. L'élément de répartition 13 est configuré de sorte que la distribution du premier fluide F1 est homogène à l'intérieur du flux du deuxième fluide F2 sortant hors du dispositif d'alimentation 18. Les premiers canaux C1 sont configurés de sorte que, dans chacun d'eux, le deuxième fluide F2 circule le long du film ruisselant de premier fluide F1 et est au moins partiellement absorbé par le premier fluide F1 avec un transfert de masse du deuxième fluide F2 vers le premier fluide F1. Notamment, le dispositif d'alimentation 18 du deuxième fluide F2 comprend une canalisation 19 raccordée par piquage à une entrée 20 classique de l'échangeur à plaques 15. A l'intérieur de la canalisation 19 s'étend au moins une partie d'une canalisation 21 du dispositif de distribution 11 pour l'écoulement du premier fluide F1 en amont de l'élément tubulaire et l'approvisionnement de ce dernier en flux de premier fluide.

Autrement dit, le système comprend une double arrivée de fluide F1, F2 : le premier fluide F1, notamment de nature liquide, est acheminé par la conduite 21 de diamètre inférieur à la conduite 19 d'amenée du deuxième fluide F2. La conduite 21 est placée à l'intérieur de la conduite 19 de sorte que les deux axes des conduites 19, 21 soient parallèles selon X. Le diamètre de la conduite 21 correspond à celui du piquage de l'échangeur à plaques 15. La position relative des axes des conduites 19, 21 dépend du dispositif de distribution 11 et de l'espace disponible à l'entrée 20. Les fluides F1 et F2 venant de points distincts, un passage étanche 22 dans la paroi de la canalisation 19 permet de faire passer la canalisation 21 de l'extérieur vers l'intérieur de la conduite 19. Ce passage étanche 22 est réalisé perpendiculairement à la paroi, l'orientation de la conduite 21 se redressant ensuite par un coude 23 ou un cintrage à 90° disposé à l'intérieur de la conduite 19. Le diamètre de connexion ou piquage de l'échangeur à plaques 15 et le diamètre de perçage des plaques 16 doivent être suffisamment grands pour permettre d'insérer l'élément tubulaire du dispositif de distribution 11 de diamètre suffisant à l'écoulement du premier fluide F1, de l'ordre de 13 mm par exemple, et d'offrir une section restante suffisante pour la circulation du deuxième fluide F2 sortant hors de la conduite 19. Cela peut nécessiter un éventuel élément d'élargissement 24 de la conduite 19 avant le passage étanche 22 et le piquage à l'échangeur à plaques 15.

Dans le cadre des machines frigorifiques à absorption, la réaction d'absorption du deuxième fluide F2 est exothermique et sensible à la température : un échauffement ralentit la vitesse de la réaction d'absorption jusqu'à l'arrêt total lorsque la température d'équilibre thermodynamique est atteinte. Il est donc souhaité de refroidir la solution absorbante F1 au fur et à mesure de l'avancement de la réaction. De plus, la réaction doit être complète en sortie de l'échangeur à plaques 15 car la solution résultante est ensuite entraînée vers une pompe hydraulique de la machine thermodynamique dont le fonctionnement risquerait d'être endommagé par la présence de gaz. C'est pourquoi, le système comprend d'une part une pluralité de deuxièmes canaux d'écoulement fluidique C2, notamment délimités entre eux par des plaques 16 de l'échangeur à plaques 15, d'autre part un dispositif d'alimentation (non représenté) des deuxièmes canaux C2 en un troisième fluide F3 de refroidissement circulant dans la pluralité de deuxième canaux C2 de sorte à réaliser un échange thermique, notamment par l'intermédiaire des plaques 16, avec le premier fluide F1 et/ou le deuxième fluide F2 circulant dans les premiers canaux C1. Le troisième fluide F3 circule notamment en sens inverse des fluides circulant dans les canaux C1.

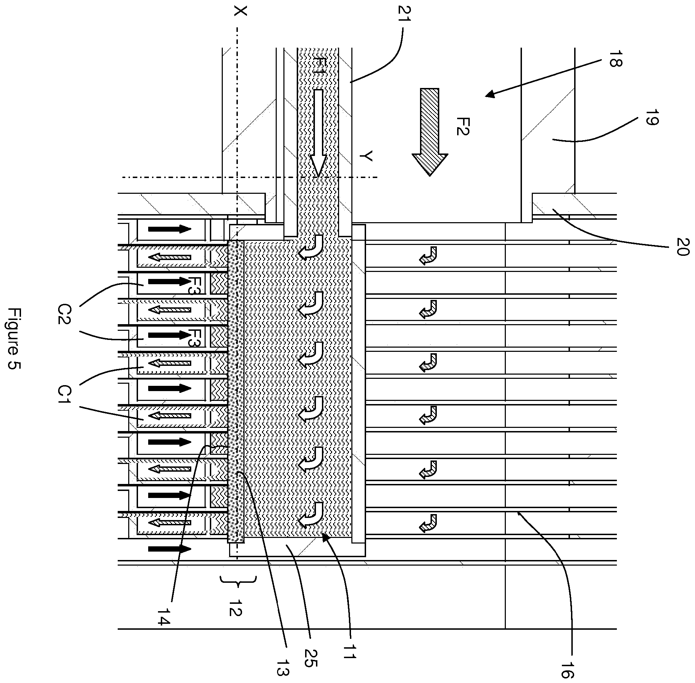

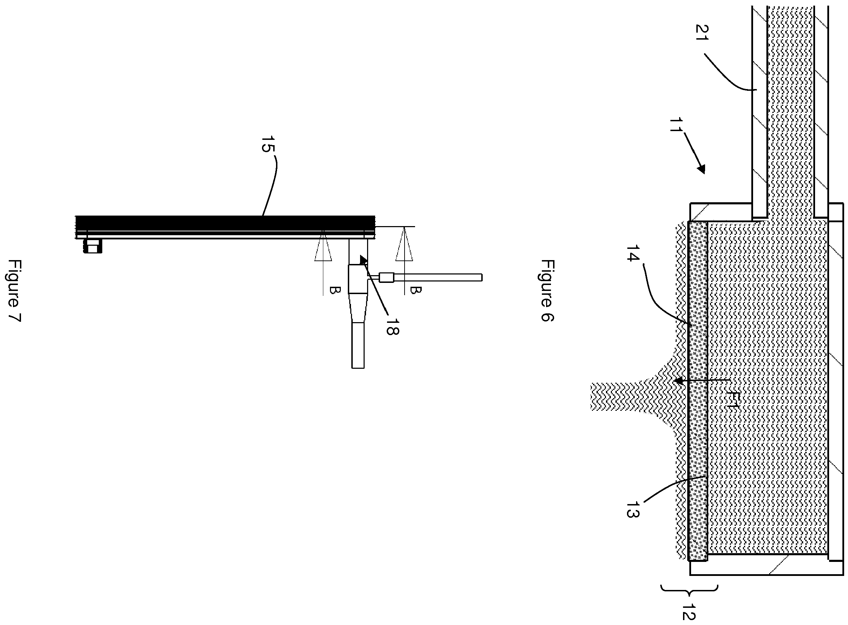

Dans un premier mode de réalisation représenté aux figures 5 et 6, l'élément de répartition 13 comprend une structure, notamment autoporteuse, de matière frittée formée par agglomération de billes. Elle est notamment configurée de sorte à être dépourvue de direction privilégiée d'écoulement du premier fluide F1 et à présenter un coefficient d'écoulement du premier fluide F1 dépendant de la finesse de la matière frittée. Généralement, la taille des interstices d'un matériau fritté convenable pour cette application est comprise entre 20 et 500µm. La taille des interstices n'est pas forcément égale à celle des grains frittés.

Dans un deuxième mode de réalisation (non représenté), l'élément de répartition 13 comprend une toile métallique enroulée.

Ces deux modes de réalisation partagent les avantages suivants :
- une construction intégrale en matériau inoxydable est possible, avec des assemblages soudés. Ceci permet de travailler avec des couples de fluides F1 et F2 corrosifs comme respectivement le couple ammoniac/eau par exemple.
- le matériau poreux est régulièrement passant. Pour cette raison, il n'y a pas besoin de réaliser un alignement individuel entre l'élément tubulaire du dispositif de distribution 11 et chaque premier canal C1 formé par les plaques 16. Ceci rend l'installation du système plus robuste.
- le bon fonctionnement de l'écoulement n'est pas particulièrement sensible à la précision dimensionnelle de l'échangeur à plaques 15.
- les matériaux poreux sont des produits industriels, déjà utilisés pour d'autres applications (catalyse, vinification...).
- le niveau de puissance de l'absorbeur est facilement adaptable. La longueur de l'élément de répartition 13 poreux s'adapte au nombre de plaques 16 dont dispose l'échangeur à plaques 15 selon la première direction X.
- les multitudes de trajets possibles en chicanes pour l'écoulement du premier fluide F1 induisent une forte tolérance aux obstructions dues aux impuretés, puisqu'il y a de nombreux trajets adjacents possibles en cas d'obstacle. De plus, la matière frittée ayant une surface irrégulière limite fortement l'effet d'étanchéité réalisée par les impuretés. Il y a donc une très bonne résistance de la solution à l'encrassement,
- la faible sensibilité du système à la verticalité de l'échangeur, en comparaison avec les systèmes de surverse utilisés dans les absorbeurs basés sur des échangeurs à tubes et calandre,
- le faible encombrement de la solution basée sur un échangeur à plaques,
- la faible charge en fluide,
- la forte étendue de la plage de fonctionnement, caractérisée notamment par des variations de débit sur les premier et deuxième fluides,
- la forme longiligne d'un échangeur permet d'améliorer le taux de couverture des plaques par un film ruisselant.

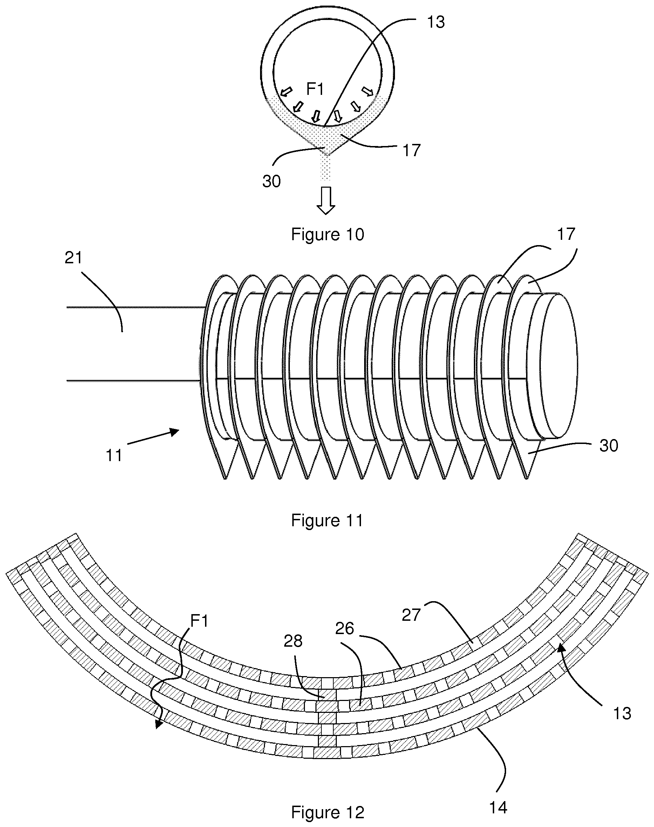

Dans un troisième mode de réalisation représenté à la figure 12, l'élément de répartition 13 comprend un empilement de feuilles 26 munies chacune d'une pluralité de perçages 27 et séparées deux à deux par des éléments d'entretoisement 28 autorisant une circulation du premier fluide F1 entre les feuilles 26. Les perçages 27 de deux feuilles 26 adjacentes au sein de l'empilement sont décalés dans une direction perpendiculaire à la direction de perçage de sorte à être éviter tout alignement des perçages dans la direction d'empilement afin de multiplier les chicanes durant l'écoulement fluidique.

Comme indiqué précédemment, le dispositif de distribution 11 comprend un élément tubulaire d'extrémité, monté dans le prolongement et à l'extrémité de la conduite 21. L'élément tubulaire est destiné à être inséré à l'intérieur de l'échangeur à plaques 15, dans une série de perforations 29 ménagées dans des plaques 16 de l'échangeur à plaques 15 en alignement les unes avec les autres suivant la première direction X de sorte que l'élément de répartition 13 que porte l'élément tubulaire soit en vis-à-vis avec les premiers canaux C1 selon la deuxième direction Y. L'élément tubulaire est d'une part ouvert à une extrémité pour permettre son alimentation par le flux de premier fluide F1 en prolongeant la conduite 21 et d'autre part fermé à son extrémité opposée, de manière étanche au flux de premier fluide F1, par un élément d'obturation 25. En référence aux figures, au moins une partie (située à l'aplomb des zones d'alimentation des premiers canaux C1) des parois de l'élément tubulaire est constituée par l'élément de répartition 13 du premier fluide F1, la partie restante des parois de l'élément tubulaire étant étanche au premier fluide F1. Notamment, l'élément tubulaire peut adopter une forme générale de cylindre, par exemple de section circulaire. Dans ce cas, sur au moins une partie de la longueur du cylindre, l'élément de répartition 13 est disposé au niveau d'un secteur angulaire a de la section de coupe du cylindre en regard des zones d'alimentation des premiers canaux C1 suivant la deuxième direction Y. Autrement dit, la portion de cet élément tubulaire en vis-à-vis vertical avec les canaux C1 est formée sur une partie de son périmètre (vu en coupe) par l'élément de réparation 13 alors conformé de sorte à présenter une forme similaire ou non au reste du périmètre de l'élément tubulaire, tout en permettant au premier fluide F1 de s'écouler régulièrement sur toute sa surface de sortie 14. Cet élément de répartition 13 a ainsi par exemple une forme de cylindre tronqué dont l'angle d'ouverture a est tel qu'il permet de distribuer le premier fluide F1 équitablement dans les premiers canaux C1 avec une perte de charge maitrisée. Il reste possible de prévoir que toutes les parois de l'élément tubulaire soient constitutives de l'élément de répartition 13.

L'utilisation d'un élément de répartition 13 tend cependant à réduire fortement la vitesse du premier fluide F1 sortant hors de l'élément tubulaire, ce qui favorise un effet de coalescence du flux aval en un seul filet (se reporter à la figure 6 qui schématise le principe de coalescence). Ceci s'opposant à l'objectif recherché de distribution homogène, le système comprend un dispositif anti-coalescence configuré pour s'opposer à l'effet de coalescence du premier fluide F1 sortant à la surface de sortie 14 de l'élément de répartition 13. Le dispositif anti-coalescence possède des éléments d'appui planaires en contact de ladite surface de sortie 14 en différents emplacements de la surface de sortie 14, notamment des emplacements échelonnés par exemple de manière régulière selon la première direction X. La version prévoyant un contact des éléments d'appui est préférée à la variante mettant en œuvre une proximité immédiate des éléments d'appui.

Chaque élément d'appui est formé par un bord d'une plaque 16 donnée de l'échangeur à plaques 15, notamment un bord supérieur de la plaque 16 suivant la deuxième direction Y. Il se trouve en effet que les plaques 16 des échangeurs à plaques 15 industriels connus correspondent à la géométrie d'éléments d'appui planaires fins adaptés à la fonction recherchée d'anti-coalescence. Les plaques 16 possèdent des perforations concentriques aux piquages formant classiquement les distributeurs et collecteurs. Grâce à ces perforations, les plaques 16 présentent une tranche intérieure circulaire avec laquelle il est possible de mettre en contact le matériau poreux. D'autre part, l'écoulement en sortie du matériau poreux n'a pas de direction privilégiée selon laquelle les vitesses d'écoulement fluidique seraient particulièrement fortes. Par conséquent, l'écoulement du premier fluide est principalement régi par les forces de tension superficielle et par la gravité, ce qui oriente le premier fluide F1 vers le point bas selon la direction Y. C'est pourquoi le bord de plaque 16 et/ou l'élément de répartition 13 sont configurés de sorte que le contact entre le bord de plaque 16 et la surface de sortie 14 de l'élément de répartition 13 soit situé au niveau d'un point bas de la surface de sortie 14 suivant la deuxième direction Y, pour séparer au mieux le flux de premier flux liquide.

Toutefois dans un mode de réalisation possible en combinaison, chaque élément d'appui peut être formé par une ailette 17 (figures 10 et 11) rapportée autour de l'élément tubulaire du dispositif de distribution 11, au moins au niveau de l'élément de répartition 13, voire sur tout le périmètre (vu en coupe) de l'élément tubulaire. L'ailette 17 présente une forme extérieure munie d'une pointe 30 ou goutte dirigée vers le bas selon Y, au point bas de l'ailette 17 suivant la deuxième direction Y. La forme extérieure des ailettes 17 est telle que cette pointe permet par sa forme aiguisée de minimiser l'effet de capillarité et donc de former un filet localisé avec le premier fluide F1 sortant de la surface 14. Le lieu où le filet liquide se forme, pour une ailette 17 donnée, est donc contrôlé avec précision.
L'invention concerne aussi une machine thermodynamique comprenant au moins un tel système, notamment :
- les machines thermodynamiques à absorption fonctionnant avec des couples de premier et deuxième fluides comme par exemple les couples ammoniac/eau et bromure de lithium/eau,
- et/ou une tour de lavage : une tour de lavage prévoit de faire circuler, à contre-courant, un gaz (deuxième fluide F2) sous une fine pluie de réactif liquide (premier fluide F1). La finesse des gouttelettes de liquide augmente la surface de réaction.
- et/ou toutes les applications où un film ruisselant est utilisé pour favoriser des transferts de masse entre deux fluides,
- et/ou toutes les applications de double distribution homogène de gaz et de liquide dans des canaux communs aux deux flux.

Notamment, l'invention porte sur une machine de réfrigération par absorption, dans laquelle le deuxième fluide F2 est au moins partiellement absorbé par le premier fluide F1 au niveau d'un absorbeur constitué par un système correspondant à la description précédente. La machine peut alors comprendre, en sus, un système solaire thermique prenant en entrée de l'énergie solaire et transférant en sortie de la chaleur au premier et deuxième fluides F1, F2 issus d'un tel absorbeur ainsi constitué. Ainsi, la machine utilise alors le système d'une manière telle que les premier et deuxième fluides F2 sont configurés de sorte que le deuxième fluide F2 est au moins partiellement absorbé par le premier fluide F1 durant l'écoulement dans les premiers canaux d'écoulement fluidique C1, pour constituer cet absorbeur de machine thermodynamique de réfrigération par absorption solaire. Le premier fluide F1 peut être une solution à base d'eau avec de l'ammoniac et le deuxième fluide F2 peut être de l'ammoniac sous forme gazeuse et/ou du bromure de lithium et/ou du chlorure de lithium. Le premier fluide F1 peut aussi être une solution d'eau avec du bromure de lithium et/ou du chlorure de lithium et le deuxième fluide F2 peut être de l'eau sous forme vapeur.

Le phénomène d'absorption est spécifique et difficile à appréhender puisqu'il combine un écoulement avec un transfert de masse, un changement de phase et un échange thermique, tous ces phénomènes étant liés entre eux en ce qui concerne les vitesses d'avancement. La présente invention décrit une méthode innovante destinée à favoriser les divers phénomènes physiques ayant lieu dans un absorbeur ainsi constitué.

Finalement, en référence à la description précédente, il convient de préciser que :
- le premier fluide rencontre le second fluide en aval de l'élément de répartition après que le premier fluide en soit sorti,
- seul le premier fluide alimente le dispositif de distribution 11 et traverse l'élément de répartition : au contraire le deuxième fluide ne traverse pas le dispositif de distribution et l'élément de répartition,
- le deuxième fluide est préférentiellement un réfrigérant, notamment apte à être au moins partiellement absorbé par le premier fluide,
- le fluide qui traverse l'élément de répartition est un fluide préférentiellement de type absorbant, notamment monophasique, préférentiellement de nature liquide.

Un exemple de système est donné ci-dessous dans le cas envisageable où le premier fluide est de l'eau et où le réfrigérant est NH₃. Il est envisagé une puissance de l'échangeur absorbeur égale à 6,5kW. Le nombre de plaques de l'échangeur à plaques est égal à 2. Le diamètre de l'élément tubulaire est 13 mm. Le diamètre de perçage des plaques est 32 mm. La hauteur de l'échangeur est 500mm et sa largeur est 110 mm. Le débit massique de deuxième fluide est 15 kg/h. Le débit massique de premier fluide est environ 52 kg/h. L'épaisseur de l'élément de répartition, correspondant à l'épaisseur de l'élément tubulaire, est environ 1,5 mm, tandis que sa longueur est environ 28 mm.

A titre de comparaison, pour un échangeur de même empreinte mais avec environ 100 plaques, il est possible d'atteindre une puissance supérieure à 60 kW en conservant le même débit linéique liquide du film ruisselant et le même débit de gaz réfrigérant par canal, la longueur de l'élément tubulaire étant alors d'environ 240 mm.

## Revendications

1. Système comprenant un échangeur à plaques (15) comportant une pluralité de plaques (16) délimitant entre elles deux à deux au moins des premiers canaux (C1) d'écoulement fluidique parallèles et un dispositif de distribution (11) alimenté par un flux d'un premier fluide (F1), notamment un liquide, et injectant le flux de premier fluide dans la pluralité de premiers canaux au niveau d'une sortie (12) du dispositif de distribution, lesdits premiers canaux étant échelonnés selon une première direction (X), la sortie du dispositif de distribution étant constituée par un élément de répartition (13) du premier fluide, notamment formé dans un matériau poreux, configuré de sorte à être traversé par le premier fluide avec une perte de charge telle que le premier fluide sort hors de l'élément de répartition selon une répartition surfacique uniforme au niveau d'une surface de sortie (14) de l'élément de répartition, d'une manière assurant une alimentation homogène en premier fluide des premiers canaux, dans lequel le dispositif de distribution comprend un élément tubulaire ouvert à une extrémité pour permettre l'alimentation de l'élément tubulaire par le flux de premier fluide et fermé à une extrémité opposée de manière étanche au flux de premier fluide, et en ce que tout ou partie des parois de l'élément tubulaire est constituée par l'élément de répartition du premier fluide, la partie éventuellement restante des parois de l'élément tubulaire étant étanche au premier fluide et en ce que le système comprend un dispositif d'alimentation (18) apte à alimenter lesdites zones d'alimentation des premiers canaux en un flux d'un deuxième fluide (F2), notamment un gaz, le premier fluide étant distribué en sortie du dispositif de distribution de sorte à rencontrer directement après son éjection un flux formé par le deuxième fluide préalablement sortant à la sortie du dispositif d'alimentation, et en ce qu'il comprend un dispositif anti-coalescence configuré pour s'opposer à l'effet de coalescence du premier fluide sortant à la surface de sortie de l'élément de répartition, le dispositif anti-coalescence possédant des éléments d'appui planaires en contact ou à proximité immédiate de ladite surface de sortie (14) en différents emplacements de la surface de sortie (14), chaque élément d'appui étant formé par un bord d'une plaque (16) donnée de l'échangeur à plaques (15), notamment un bord supérieur de la plaque suivant la deuxième direction (Y), ledit bord de plaque (16) étant en contact avec la surface de sortie (14) de l'élément de répartition (13), **caractérisé en ce que** l'élément de répartition du premier fluide est décalé selon une deuxième direction (Y) sensiblement perpendiculaire à la première direction (X) du centre du dispositif d'alimentation (18).

2. Système selon la revendication 1, **caractérisé en ce que** l'élément de répartition (13) comprenant des orifices de passage traversant toute l'épaisseur de l'élément de répartition et débouchant sur la surface de sortie (14), ces passages traversants étant tortueux ou avec des chicanes depuis la surface d'entrée vers la surface de sortie (14)

3. Système selon la revendication 1 ou 2, **caractérisé en ce que** le premier fluide est un liquide de type absorbant et **en ce que** le deuxième fluide est un gaz, notamment un réfrigérant, apte à être au moins partiellement absorbé par le premier fluide avec un transfert de masse du deuxième fluide vers le premier fluide.

4. Système selon l'une des revendications 1 à 3, **caractérisé en ce que** chaque premier canal comprend une zone d'alimentation en fluide, les zones d'alimentation associées à la pluralité de premiers canaux échelonnées suivant une première direction (X), notamment orientée sensiblement horizontalement, et **en ce que** l'élément de répartition du premier fluide est configuré de sorte à assurer une homogénéité au moins linéique de la distribution du premier fluide suivant la première direction.

5. Système selon la revendication 3, **caractérisé en ce que** l'élément de répartition du premier fluide est configuré de sorte que sa surface de sortie est disposée en vis-à-vis des zones d'alimentation des premiers canaux, suivant une deuxième direction (Y) sensiblement perpendiculaire à la première direction, notamment orientée sensiblement verticalement.

6. Système selon l'une des revendications 1 à 5, **caractérisé en ce que** l'élément de répartition comprend une structure autoporteuse de matière frittée formée par agglomération de billes, notamment configurée de sorte à être dépourvue de direction privilégiée d'écoulement du premier fluide et à présenter un coefficient d'écoulement du premier fluide dépendant de la finesse de la matière frittée.

7. Système selon l'une des revendications 1 à 5, **caractérisé en ce que** l'élément de répartition comprend une toile métallique enroulée.

8. Système selon l'une des revendications 1 à 5, **caractérisé en ce que** l'élément de répartition comprend un empilement de feuilles (26) munies de perçages (27) et séparées deux à deux par des éléments d'entretoisement (28) autorisant une circulation du premier fluide entre les feuilles, les perçages de deux feuilles adjacentes étant décalés dans une direction perpendiculaire à la direction de perçage.

9. Système selon la revendication 8 **caractérisé en ce que** les plaques (16) comportent des corrugations inclinées par rapport à la verticale, notamment selon un angle compris environ entre 20 et 40°, notamment de l'ordre de 30°.

10. Système selon, la revendication 1 **caractérisé en ce que** l'élément tubulaire est inséré dans une série de perforations (29) ménagées dans des plaques de l'échangeur à plaques en alignement les unes avec les autres suivant la première direction de sorte que l'élément de répartition (13) soit en vis-à-vis avec les premiers canaux selon la deuxième direction.

11. Système selon l'une des revendications 1 à 10 **caractérisé en ce que** chaque élément d'appui du dispositif anti-coalescence est formé par une ailette (17) rapportée autour de l'élément tubulaire, au moins au niveau de l'élément de répartition.

12. Système selon la revendication 11, **caractérisé en ce que** l'ailette présente une forme extérieure munie d'une pointe (30) dirigée vers le bas au point bas de l'ailette suivant la deuxième direction.

13. Système selon l'une des revendications 1 à 2. 12, **caractérisé en ce que** l'élément de répartition est configuré de sorte que la distribution du premier fluide est homogène à l'intérieur du flux du deuxième fluide.

14. Système selon l'une des revendications 1 à 13, **caractérisé en ce que** les premiers canaux sont configurés de sorte que, dans chacun d'eux, le deuxième fluide est au moins partiellement absorbé par le premier fluide avec un transfert de masse du deuxième fluide vers le premier fluide.

15. Système selon l'une des revendications 1 à 14, **caractérisé en ce que** le dispositif d'alimentation du deuxième fluide comprend une canalisation (19) raccordée à une entrée (20) de l'échangeur à plaques et à l'intérieur de laquelle s'étend au moins une partie d'une canalisation (21) du dispositif de distribution pour l'écoulement du premier fluide.

16. Système selon l'une des revendications 1 à 15, **caractérisé en ce qu'**il comprend d'une part une pluralité de deuxièmes canaux d'écoulement fluidique (C2), notamment délimités entre eux par des plaques de l'échangeur, d'autre part un dispositif d'alimentation des deuxièmes canaux en un troisième fluide (F3) de refroidissement circulant dans la pluralité de deuxième canaux de sorte à réaliser un échange thermique, notamment par l'intermédiaire des plaques, avec le premier fluide et/ou le deuxième fluide circulant dans les premiers canaux.

17. 10. Machine thermodynamique comprenant au moins un système selon l'une des revendications 1 à 16.

18. Machine thermodynamique selon la revendication 17, notamment machine de réfrigération par absorption, dans laquelle le deuxième fluide est au moins partiellement absorbé par le premier fluide au niveau d'un absorbeur constitué par ledit système.

19. Machine thermodynamique selon la revendication 18, **caractérisée en ce qu'**elle comprend un système solaire thermique prenant en entrée de l'énergie solaire et transférant en sortie de la chaleur au premier et deuxième fluides issus de l'absorbeur.

20. Utilisation d'un système selon l'une des revendications 1 à 16 dans laquelle les premier et deuxième fluides sont configurés de sorte que le deuxième fluide est au moins partiellement absorbé par le premier fluide durant l'écoulement dans les premiers canaux d'écoulement fluidique, pour constituer un absorbeur pour une machine thermodynamique de réfrigération par absorption solaire.

## Patentansprüche

1. System, das einen Plattentauscher (15) enthält, der eine Vielzahl von Platten (16), die untereinander paarweise mindestens erste parallele Fluidströmungskanäle (C1) begrenzen, und eine Ausgabevorrichtung (11) aufweist, die mit einem Strom eines ersten Fluids (F1), insbesondere einer Flüssigkeit, versorgt wird und den Strom ersten Fluids in die Vielzahl von ersten Kanälen im Bereich eines Ausgangs (12) der Ausgabevorrichtung einspeist, wobei die ersten Kanäle gemäß einer ersten Richtung (X) gestaffelt sind, wobei der Ausgang der Ausgabevorrichtung aus einem Verteilungselement (13) des ersten Fluids besteht, insbesondere aus einem porösen Material geformt, derart konfiguriert, dass es vom ersten Fluid mit einem derartigen Druckverlust durchquert wird, dass das erste Fluid aus dem Verteilungselement gemäß einer gleichmäßigen Oberflächenverteilung im Bereich einer Ausgangsfläche (14) des Verteilungselements austritt, in einer Weise, die eine homogene Versorgung der ersten Kanäle mit erstem Fluid gewährleistet, wobei die Ausgabevorrichtung ein Rohrelement enthält, das an einem Ende offen ist, um die Versorgung des Rohrelements mit dem Strom ersten Fluids zu erlauben, und an einem gegenüberliegenden Ende gegenüber dem Strom ersten Fluids dicht verschlossen ist, und dass alle oder ein Teil der Wände des Rohrelements aus dem Verteilungselement des ersten Fluids bestehen, wobei der möglicherweise verbleibende Teil der Wände des Rohrelements gegenüber dem ersten Fluid dicht ist, und dass das System eine Versorgungsvorrichtung (18) enthält, die die Versorgungszonen der ersten Kanäle mit einem Strom eines zweiten Fluids (F2), insbesondere eines Gases, versorgen kann, wobei das erste Fluid am Ausgang der Ausgabevorrichtung ausgegeben wird, um direkt nach seinem Ausstoß auf einen vom zweiten Fluid gebildeten Strom zu treffen, der vorher am Ausgang der Versorgungsvorrichtung austritt, und dass es eine koaleszenzhemmende Vorrichtung enthält, die konfiguriert ist, der Koaleszenzwirkung des ersten Fluids entgegenzuwirken, das an der Ausgangsfläche des Verteilungselements austritt, wobei die koaleszenzhemmende Vorrichtung planare Auflageelemente in Kontakt mit oder in direkter Nähe der Ausgangsfläche (14) an verschiedenen Stellen der Ausgangsfläche (14) besitzt, wobei jedes Auflageelement von einem Rand einer gegebenen Platte (16) des Plattentauschers (15) gebildet wird, insbesondere einem oberen Rand der Platte gemäß der zweiten Richtung (Y), wobei der Plattenrand (16) mit der Ausgangsfläche (14) des Verteilungselements (13) in Kontakt ist, **dadurch gekennzeichnet, dass** das Verteilungselement des ersten Fluids gemäß einer zweiten Richtung (Y) im Wesentlichen lotrecht zur ersten Richtung (X) von der Mitte der Versorgungsvorrichtung (18) versetzt ist.

2. System nach Anspruch 1, **dadurch gekennzeichnet, dass** das Verteilungselement (13) Durchgangsöffnungen enthält, die die ganze Dicke des Verteilungselements durchqueren und auf der Ausgangsfläche (14) münden, wobei diese durchquerenden Durchgänge von der Eingangsfläche zur Ausgangsfläche (14) gewunden oder mit Zickzackzonen sind.

3. System nach Anspruch 1 oder 2, **dadurch gekennzeichnet, dass** das erste Fluid eine Flüssigkeit vom absorbierenden Typ ist, und dass das zweite Fluid ein Gas ist, insbesondere ein Kühlmittel, das zumindest teilweise vom ersten Fluid mit einem Massenübergang vom zweiten Fluid zum ersten Fluid absorbiert werden kann.

4. System nach einem der Ansprüche 1 bis 3, **dadurch gekennzeichnet, dass** jeder erste Kanal eine Fluidversorgungszone enthält, und die der Vielzahl von ersten Kanälen zugeordneten Versorgungszonen gemäß einer ersten Richtung (X) gestaffelt sind, die insbesondere im Wesentlichen waagrecht ausgerichtet ist, und dass das Verteilungselement des ersten Fluids so konfiguriert ist, dass es eine mindestens längenbezogene Homogenität der Verteilung des ersten Fluids gemäß der ersten Richtung gewährleistet.

5. System nach Anspruch 3, **dadurch gekennzeichnet, dass** das Verteilungselement des ersten Fluids so konfiguriert ist, dass seine Ausgangsfläche gegenüber von Versorgungszonen der ersten Kanäle gemäß einer zweiten Richtung (Y) im Wesentlichen lotrecht zur ersten Richtung angeordnet ist, insbesondere im Wesentlichen senkrecht ausgerichtet ist.

6. System nach einem der Ansprüche 1 bis 5, **dadurch gekennzeichnet, dass** das Verteilungselement eine selbsttragende Struktur aus Sintermaterial enthält, das durch Agglomeration von Kugeln geformt wird, die insbesondere so konfiguriert ist, dass sie keine bevorzugte Strömungsrichtung des ersten Fluids hat und einen Strömungskoeffizienten des ersten Fluids aufweist, der von der Feinheit des Sintermaterials abhängt.

7. System nach einem der Ansprüche 1 bis 5, **dadurch gekennzeichnet, dass** das Verteilungselement ein aufgewickeltes Drahtgewebe enthält.

8. System nach einem der Ansprüche 1 bis 5, **dadurch gekennzeichnet, dass** das Verteilungselement einen Stapel von Folien (26) enthält, die mit Bohrungen (27) versehen und paarweise durch Abstandshalterelemente (28) getrennt sind, die eine Zirkulation des ersten Fluids zwischen den Folien erlauben, wobei die Bohrungen von zwei benachbarten Folien in einer Richtung lotrecht zur Bohrrichtung versetzt sind.

9. System nach Anspruch 8, **dadurch gekennzeichnet, dass** die Platten (16) Riffelungen aufweisen, die bezüglich der Senkrechten insbesondere gemäß einem Winkel zwischen etwa 20 und 40°, insbesondere in der Größenordnung von 30°, geneigt sind.

10. System nach Anspruch 1, **dadurch gekennzeichnet, dass** das Rohrelement in eine Reihe von Lochungen (29) eingeführt wird, die in Platten des Plattentauschers in Flucht miteinander gemäß der ersten Richtung vorgesehen sind, so dass das Verteilungselement (13) sich gemäß der zweiten Richtung gegenüber den ersten Kanälen befindet.

11. System nach einem der Ansprüche 1 bis 10, **dadurch gekennzeichnet, dass** jedes Auflageelement der koaleszenzhemmenden Vorrichtung von einer Rippe (17) gebildet wird, die zumindest im Bereich des Verteilungselements um das Rohrelement herum aufgesteckt ist.

12. System nach Anspruch 11, **dadurch gekennzeichnet, dass** die Rippe eine Außenform aufweist, die mit einer Spitze (30) versehen ist, die am unteren Punkt der Rippe gemäß der zweiten Richtung nach unten gerichtet ist.

13. System nach einem der Ansprüche 1 bis 12, **dadurch gekennzeichnet, dass** das Verteilungselement so konfiguriert ist, dass die Ausgabe des ersten Fluids im Inneren des Stroms des zweiten Fluids homogen ist.

14. System nach einem der Ansprüche 1 bis 13, **dadurch gekennzeichnet, dass** die ersten Kanäle so konfiguriert sind, dass in jedem von ihnen das zweite Fluid zumindest teilweise vom ersten Fluid absorbiert wird, mit einem Massenübergang vom zweiten Fluid zum ersten Fluid.

15. System nach einem der Ansprüche 1 bis 14, **dadurch gekennzeichnet, dass** die Versorgungsvorrichtung des zweiten Fluids eine Rohrleitung (19) enthält, die an einen Eingang (20) des Plattentauschers angeschlossen ist und in deren Inneren sich mindestens ein Teil einer Rohrleitung (21) der Ausgabevorrichtung für die Strömung des ersten Fluids erstreckt.

16. System nach einem der Ansprüche 1 bis 15, **dadurch gekennzeichnet, dass** es einerseits eine Vielzahl von zweiten Fluidströmungskanälen (C2), die insbesondere durch Platten des Tauschers untereinander begrenzt sind, andererseits eine Versorgungsvorrichtung der zweiten Kanäle mit einem dritten Kühlfluid (F3) enthält, das in der Vielzahl von zweiten Kanälen zirkuliert, um einen Wärmeaustausch, insbesondere über die Platten, mit dem ersten Fluid und/oder dem zweiten Fluid durchzuführen, die in den ersten Kanälen zirkulieren.

17. Thermodynamische Maschine, die mindestens ein System nach einem der Ansprüche 1 bis 16 enthält.

18. Thermodynamische Maschine nach Anspruch 17, insbesondere Absorptionskühlungsmaschine, bei der das zweite Fluid zumindest teilweise vom ersten Fluid im Bereich eines vom System gebildeten Absorbers absorbiert wird.

19. Thermodynamische Maschine nach Anspruch 18, **dadurch gekennzeichnet, dass** sie ein thermisches Solarsystem enthält, das am Eingang Sonnenenergie aufnimmt und am Ausgang Wärme an die vom Absorber stammenden ersten und zweiten Fluide überträgt.

20. Verwendung eines Systems nach einem der Ansprüche 1 bis 16, bei der das erste und zweite Fluid so konfiguriert sind, dass das zweite Fluid während der Strömung in den ersten Fluidströmungskanälen zumindest teilweise vom ersten Fluid absorbiert wird, um einen Absorber für eine thermodynamische Maschine zur Kühlung durch Solarabsorption zu bilden.

## Claims

1. System comprising a plate exchanger (15) comprising a plurality of plates (16) delimiting between them, two by two, at least parallel first fluidic flow channels (C1) and a distribution device (11) fed by a flow of a first fluid (F1), notably a liquid, and injecting the flow of first fluid into the plurality of first channels at an output (12) of the distribution device, said first channels being staggered in a first direction (X), the output of the distribution device consisting of a distribution element (13) for the first fluid, notably formed in a porous material, configured in such a way as to be passed through by the first fluid with a pressure drop such that the first fluid leaves from the distribution element with a uniform surface distribution at an output surface (14) of the distribution element, in a way that ensures a uniform feed of first fluid for the first channels, in which the distribution device comprises a tubular element open at one end to allow the tubular element to be fed by the flow of first fluid and closed at an opposite end in a manner that is tight to the flow of first fluid, and in that all or part of the walls of the tubular element consists of the distribution element for the first fluid, any potential remaining part of the walls of the tubular element being tight to the first fluid and in that tne system comprises a feed device (18) suitable for feeding said feed zones of the first channels with a flow of a second fluid (F2), notably a gas, the first fluid being distributed at the output of the distribution device in such a way as to directly encounter, after its ejection, a flow formed by the second fluid previously leaving at the output of the feed device, and in that it comprises an anti-coalescence device configured to oppose the effect of coalescence of the first fluid leaving at the output surface of the distribution element, the anti-coalescence device having planar support elements in contact with or in immediate proximity to said output surface (14) at different positions of the output surface (14), each support element being formed by an edge of a given plate (16) of the plate exchanger (15), notably a top edge of the given plate (16) in the second direction (Y), said plate edge (16) being in contact with the output surface (14) of the distribution element (13), **characterized in that** the distribution element for the first fluid is offset in a second direction (Y) substantially at right angles to the first direction X of the center of the feed device (18).

2. System according to Claim 1, **characterized in that** the distribution element (13) comprises passage orifices through the entire thickness of the distribution element and emerging on the output surface (14), these through passages being twisted or with chicanes from the input surface to the output surface (14).

3. System according to Claim 1 or 2, **characterized in that** the first fluid is a liquid of absorbent type and **in that** the second fluid is a gas, notably a refrigerant, suitable for being at least partially absorbed by the first fluid with a transfer of mass from the second fluid to the first fluid.

4. System according to one of Claims 1 to 3, **characterized in that** each first channel comprises a fluid feed zone, the feed zones associated with the plurality of first channels staggered in a first direction (X), notably oriented substantially horizontally, and **in that** the distribution element for the first fluid is configured in such a way as to ensure a homogeneity, at least per unit length, of the distribution of the first fluid in the first direction.

5. System according to Claim 3, **characterized in that** the distribution element for the first fluid is configured in such a way that its output surface is arranged facing feed zones of the first channels, in a second direction (Y) substantially at right angles to the first direction, notably oriented substantially vertically.

6. System according to one of Claims 1 to 5, **characterized in that** the distribution element comprises a self-supporting structure of sintered material formed by the agglomeration of balls, notably configured in such a way as to have no preferred direction of flow of the first fluid and to exhibit a coefficient of flow of the first fluid dependent on the fineness of the sintered material.

7. System according to one of Claims 1 to 5, **characterized in that** the distribution element comprises a wound metallic screen cloth.

8. System according to one of Claims 1 to 5, **characterized in that** the distribution element comprises a stack of sheets (26) provided with piercings (27) and separated in pairs by spacing elements (28) allowing a circulation of the first fluid between the sheets, the piercings of two adjacent sheets being offset in a direction at right angles to the piercing direction.

9. System according to Claim 8, **characterized in that** the plates (16) have corrugations that are inclined relative to the vertical, notably by an angle of between 20 and 40°, notably of the order of 30°.

10. System according to Claim 1, **characterized in that** the tubular element is inserted into a series of perforations (29) formed in plates of the plate exchanger in alignment with one another in the first direction in such a way that the distribution element (13) is facing the first channels in the second direction.

11. System according to one of Claims 1 to 10, **characterized in that** each support element of the anti-coalescence device is formed by a fin (17) added around the tubular element, at least at the level of the distribution element.

12. System according to Claim 11, **characterized in that** the fin has an outer form provided with a point (30) directed at the low point of the fin in the second direction.

13. System according to one of Claims 1 to 12, **characterized in that** the distribution element is configured in such a way that the distribution of the first fluid is uniform within the flow of the second fluid.

14. System according to one of Claims 1 to 13, **characterized in that** the first channels are configured in such a way that, in each of them, the second fluid is at least partially absorbed by the first fluid with a transfer of mass from the second fluid to the first fluid.

15. System according to one of Claims 1 to 14, **characterized in that** the feed device for the second fluid comprises a pipe (19) coupled to an input (20) of the plate exchanger and inside which extends at least a part of a pipe (21) of the distribution device for the flow of the first fluid.

16. System according to one of Claims 1 to 15, **characterized in that** it comprises, on the one hand, a plurality of second fluidic flow channels (C2), notably delimited between them by plates of the exchanger, and on the other hand a device for feeding the second channels with a third cooling fluid (F3) circulating in the plurality of second channels in such a way as to produce a heat exchange, notably via the plates, with the first fluid and/or the second fluid circulating in the first channels.

17. Thermodynamic machine comprising at least one system according to one of Claims 1 to 16.

18. Thermodynamic machine according to Claim 17, notably an absorption-based refrigeration machine, in which the second fluid is at least partially absorbed by the first fluid at an absorber consisting of said system.

19. Thermodynamic machine according to Claim 18, **characterized in that** it comprises a thermal solar system taking solar energy as input and, at the output, transferring heat to the first and second fluids from the absorber.

20. Use of a system according to one of Claims 1 to 16, in which the first and second fluids are configured in such a way that the second fluid is at least partially absorbed by the first fluid during the flow in the first fluidic flow channels, to constitute an absorber for a solar absorption-based thermodynamic refrigeration machine.
